# EUROPÄISCHE PATENTSCHRIFT

(11) **EP 1 824 707 B1**
(45) Veröffentlichungstag und Bekanntmachung des Hinweises auf die Patenterteilung: **14.10.2009**
(21) Anmeldenummer: 05804537.8
(22) Anmeldetag: 08.11.2005
(51) Int. Cl.: B60R 21/01, B60T 7/12

(54) **VERFAHREN UND VORRICHTUNG ZUR STEUERUNG EINER AUTOMATISCHEN NOTBREMSUNG**
METHOD AND DEVICE FOR CONTROLLING AN AUTOMATIC EMERGENCY BRAKING MANEUVER
PROCEDE ET DISPOSITIF DE COMMANDE D'UN FREINAGE D'URGENCE AUTOMATIQUE

(30) Priorität: 06.12.2004 DE 102004058663
(43) Veröffentlichungstag der Anmeldung: 29.08.2007
(73) Patentinhaber: Robert Bosch GmbH, 70442 Stuttgart (DE)
(72) Erfinder: LUCAS, Bernhard, 74354 Besigheim (DE); HEINEBRODT, Martin, 70176 Stuttgart (DE); MEISTER, Dirk, 71696 Moeglingen (DE); OECHSLE, Fred, 71642 Ludwigsburg (DE); WILHELM, Ulf, 71277 Rutesheim (DE); RANDLER, Martin, 88090 Immenstaad (DE); HAFFMANS, Paco, 71032 Boeblingen (DE); BRANZ, Wolfgang, 70180 Stuttgart (DE)
(86) Internationale Anmeldenummer: PCT/EP2005/055814
(87) Internationale Veröffentlichungsnummer: WO 2006/061299

(56) Entgegenhaltungen:
- WO-A-20/04085220
- DE-A1- 10 231 557
- US-A- 5 314 037
- PATENT ABSTRACTS OF JAPAN Bd. 017, Nr. 324 (M-1433), 21. Juni 1993 (1993-06-21) -& JP 05 039010 A (MAZDA MOTOR CORP), 19. Februar 1993 (1993-02-19)

## Beschreibung

Die vorliegende Erfindung betrifft ein Verfahren und eine Vorrichtung zur Steuerung einer automatischen Notbremsung eines Kraftfahrzeugs, zur Verminderung der Kollisionsschwere einer Fahrzeugkollision mit einem Objekt, wobei mittels einer Objektdetektionseinrichtung die Position und/oder Geschwindigkeit des Objekts bezüglich des eigenen Fahrzeugs erfasst werden, dass diese einer Kollisionserkennungseinrichtung zugeführt werden, die ermittelt, ob eine Kollision mit einem Objekt bevorsteht und bei Erkennen einer Kollision eine Notbremsung auslöst und einen Kollisionszeitpunkt ermittelt, wobei nach Ablauf der Zeitdauer bis zum ermittelten Kollisionszeitpunkt die Notbremsung beendet wird.

### Stand der Technik

Aus der DE 199 12 301 C1 ist eine Sicherheitseinrichtung für ein Kraftfahrzeug, insbesondere einen Personenkraftwagen, bekannt mit mindestens einem Aufprallsensor und einer die Bremsbetätigung des Fahrzeugs nach Maßgabe des Sensorsignals auslösenden Steuereinheit einschließlich einer Signalauswerteschaltung, die erfindungsgemäß so ausgebildet ist, dass das Schadensausmaß bei einem Auffahrunfall minimiert und unfallbedingte Folgeschäden dadurch weitgehend vermieden werden, dass die Auswerteschaltung bei einem Anstieg des Sensorsignal über einen vorgegebenen oberen Grenzwert und einem nachfolgenden Signalabfall unter einen vorgegebenen unteren Grenzwert anspricht, derart, dass die Betriebsbremsen des Fahrzeugs zeitgleich mit dem Ende des Aufprallstoßes aktiviert werden.

Aus dem Patent Abstract of Japan JP 05 039010 ist ein Notbremssystem für ein Kraftfahrzeug bekannt, bei dem automatisch eine Notbremsung ausgelöst wird, wenn ein kollisionsgefährliches Objekt erkannt wird und die Notbremsung abgebrochen wird, wenn das kollisionsgefährliche Objekt infolge eines Spurwechsels des Objekts oder des eigenen Fahrzeugs nicht mehr detektiert wird.

### Kern und Vorteile der Erfindung

Der Kern der vorliegenden Erfindung ist es, ein Verfahren und eine Vorrichtung anzugeben, die einen Notbremsvorgang bei einem Kraftfahrzeugs steuert. Da eine automatische Auslösung und Durchführung einer Notbremsung mit sehr hohem Risiko verbunden ist, wird eine Notbremsung üblicherweise erst ausgelöst, wenn das Bevorstehen einer unausweichbaren Kollision erkannt wird, sodass mittels der Notbremsung in den meisten Fällen eine Kollision nicht mehr verhinderbar ist, jedoch die Intensität des Zusammenstoßes und damit die Kollisionsschwere vermindert werden kann. Für den Fall, dass eine Notbremsung fälschlicherweise ausgelöst wurde, ist es Gegenstand der Erfindung, ein Verfahren und eine Vorrichtung anzugeben, mittels denen eine Notbremsung auch wieder deaktiviert werden kann, wenn erkannt wird, dass doch keine Kollision stattgefunden hat, um die mit der Notbremsung einhergehenden Risiken für die anderen Verkehrsteilnehmer und die Insassen des notgebremsten Fahrzeugs möglichst gering zu halten. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise ist eine Kollisionsdetektionseinrichtung vorgesehen, die bei einer erfolgten Kollision ein Kollisionsdetektionssignal an die Kollisionserkennungseinrichtung übermittelt. Hierdurch kann sicher festgestellt werden, ob zu dem berechneten Kollisionszeitpunkt tatsächlich eine Kollision des Fahrzeugs mit einem Objekt stattgefunden hat, oder ob es sich eventuell um eine fehlerbehaftete Auslösung einer Notbremsung gehandelt hat.

Weiterhin ist es vorteilhaft, dass die Kollisionsdetektionseinrichtung eine Kollision anhand einer unstetigen Änderung der Raddrehgeschwindigkeiten aller Fahrzeugräder erkannt wird. Moderne Fahrzeuge sind heute fast vollständig mit Blockierschutzeinrichtungen ausgerüstet, bei denen an jedem Rad ein Raddrehzahlsensor angebracht ist, der erkennt, ob ein Fahrzeugrad momentan blockiert oder mit welcher Geschwindigkeit sich dieses dreht. Überwacht man die Raddrehzahlgeschwindigkeiten aller Fahrzeugräder mittels Raddrehzahlsensoren, so kann man eine Kollision aufgrund einer sprunghaften Änderung der Raddrehzahlen aller Fahrzeugräder erkennen. In dem Fall, dass lediglich die Blockierschutzeinrichtung anspricht um ein Blockieren eines Rads zu verhindern, ist hierbei notwendig, dass möglichst alle Fahrzeugräder zur Kollisionsdetektion überwacht werden um eine Unterscheidung zwischen einem Ansprechen der Blockierschutzeinrichtung und einer Kollisionsdetektion zu erkennen.

Weiterhin ist es vorteilhaft, dass die Kollisionsdetektionseinrichtung eine Kollision anhand einer unstetigen Änderung der Gierratensignals erkennt. Das Gierratensignal gibt hierbei die Bewegung des Fahrzeugs um die Fahrzeughochachse an, wobei das Fahrzeug bei einer Kollision meist einen Querversatz erfährt. Dieser Querversatz ist anhand einer sunstetigen Änderung des Gierratensignals messbar und kann zu einer Kollisionsdetektion herangezogen werden.

Weiterhin ist es vorteilhaft, dass die Kollisionsdetektionseinrichtung eine Kollision anhand eines Auslösesignals einer Airbag-Auslösesensorik, insbesondere eines Beschleunigungssensors zur Airbagauslösung, erkennt. Moderne Fahrzeuge verfügen heutzutage fast vollständig über Insassenräckllaltesysteme in Form von Airbags, die mittels eines Beschleunigungssensors ausgelöst werden können. Findet eine Kollision des Fahrzeugs mit einem Objekt statt und wird ein derartiges Insassenrückhaltesystem ausgelöst, so kann das Auslösesignal zur Detektion einer Kollision an die Kollisionserkennungseinrichtung weitergegeben werden.

Besonders vorteilhaft ist, dass die Kollisionsdetektionseinrichtung eine Kollision anhand einer UND-Verknüpfung von mindestens zwei der Bedingungen aus einer unstetigen Änderung der Raddrehzahlgeschwindigkeiten aller Fahrzeugräder, einer unstetigen Änderung der Gierratensignals oder anhand eines Auslösesignals einer Airbag-Auslösesensorik erkennt. Durch die UND-Verknüpfung von zwei oder drei der aufgeführten Kollisionserkennungseinrichtungen ist es möglich, eine Kollisionsdetektion mittels mehrerer Sensoren zu plausibilisieren und damit die Wahrscheinlichkeit einer Fehlerkennung einer Kollision nahezu zu vermeiden.

Weiterhin ist es vorteilhaft, dass die Beendigung der Notbremsung erst nach einer vorbestimmten Zeitdauer nach dem berechneten Kollisionszeitpunkt erfolgt. Mittels eines Kollisionserkennungsalgorithmusses kann der Zeitpunkt der unausweichbaren, bevorstehenden Kollision bestimmt werden. Ist dieser Zeitpunkt erreicht, jedoch hat die Kollision noch nicht stattgefunden, ist es möglich, dass durch geringe Berechnungsabweichungen von der Realität ein etwas verschobener Kollisionszeitpunkt ermittelt wurde. Um nicht fälschlicherweise die Verzögerung zu beenden und eine nachträgliche Kollision in Kauf nehmen zu müssen ist es vorteilhaft, dass nach Erreichen des berechneten Kollisionszeitpunktes eine vorbestimmte Zeitdauer Δt weitergebremst wird, bevor die Deaktivierung der Verzögerungseinrichtungen die Notbremsung beendet.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, sodass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung,
- Figur 2: ein schematisches Blockschaltbild einer vorteilhaften Weiterbildung der Kollisionsdetektionseinrichtung,

- Figur 3: ein schematisches Blockschaltbild einer zweiten Weiterbildung der Kollisionsdetektionseinrichtung der erfindungsgemäßen Vorrichtung und
- Figur 4: ein Ablaufdiagramm einer Ausführungsform des erfindungsgemäßen Verfahrens.

### Beschreibung von Ausführungsbeispielen

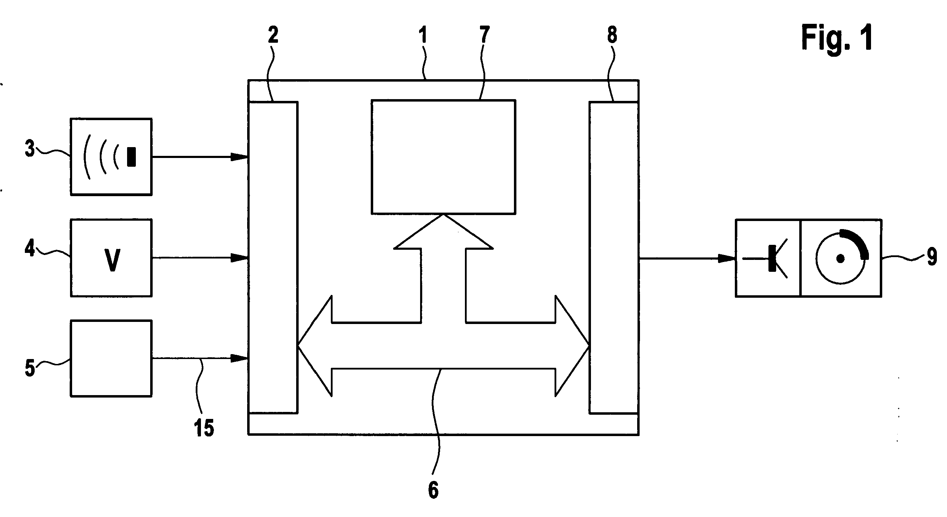

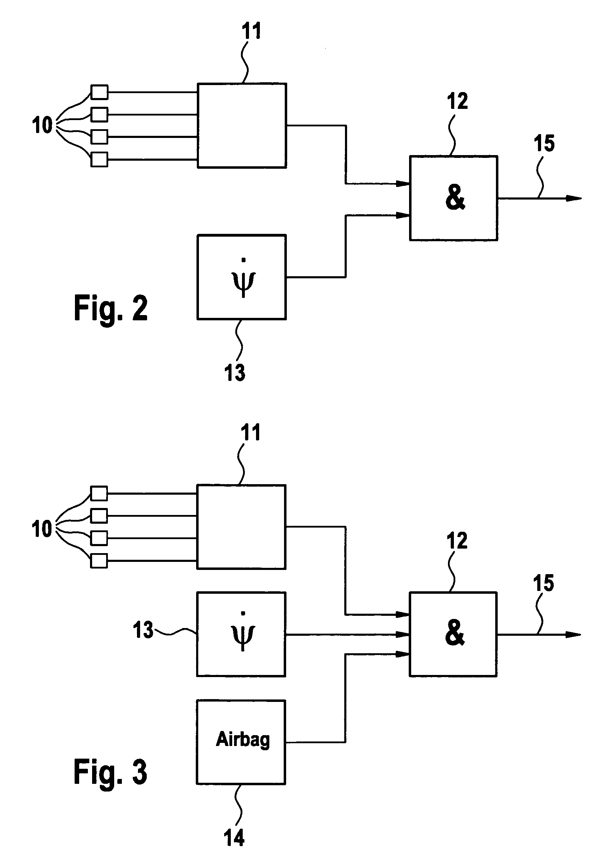

In Figur 1 ist eine Kollisionserkennungseinrichtung 1 dargestellt, die in Abhängigkeit ihr zugeführter Signale berechnet, ob eine unausweichbare Kollision des eigenen Fahrzeugs mit einem detektierten Objekt bevorsteht und bei Erkennung einer bevorstehenden, unausweichbaren Kollision den Kollisionszeitpunkt t_{Koll} berechnet sowie die Verzögerungseinrichtungen 9 des Fahrzeugs ansteuern kann. Hierzu weist die Kollisionserkennungseinrichtung 1 eine Eingangsschaltung 2 auf, mittels der der Kollisionserkennungseinrichtung 1 Eingangssignale zuführbar sind. Als Eingangssignale sind beispielsweise der Abstand und die Relativgeschwindigkeit von Objekten, die sich innerhalb eines Erfassungsbereichs einer Objektdetektionssensorik 3 befinden, vorgesehen. Die Objektdetektionssensorik 3 ist hierzu beispielsweise als Radarsensor oder Lasersensor ausgeführt, die elektromagnetische Strahlung aussendet und mittels der empfangenen, reflektierten elektromagnetischen Strahlung den Abstand d sowie die Relativgeschwindigkeit vᵣₑₗ des detektierten Objekts bezüglich des eigenen Fahrzeugs ermittelt. Weiterhin kann es vorgesehen sein, dass die Objektdetektionssensorik 3 zusätzlich den Azimutwinkel der detektierten Objekte bezüglich der eigenen Fahrzeuglängsachse ermittelt sowie eventuell die Bewegungsrichtung des detektierten Objekts erkennen kann. Weiterhin wird der Eingangsschaltung 2 ein Signal eines Geschwindigkeitssensors 4 zugeführt, das die Geschwindigkeit des eigenen Fahrzeugs repräsentiert. Mittels dieses Geschwindigkeitssignals v ist es möglich, die Relativgrößen, die die Objektdetektionssensorik 3 zur Verfiigung stellt, in Absolutgrößen umzurechnen. Weiterhin ist es möglich, mittels der Größen, die die eigenen Fahrzeugdynamik beschreiben, den zukünftigen Kursverlauf des eigenen Fahrzeugs vorauszuberechnen, wozu eventuell die Erfassung des eigenen Fahrzeuglenkwinkels zusätzlich herangezogen werden kann. Aus der Kenntnis der Objektbewegung sowie der Bewegung des eigenen Fahrzeugs lässt sich mittels Kollisionsdetektionsalgorithmen ermitteln, ob eine unausweichbare Kollision des eigenen Fahrzeugs mit dem detektierten Objekt bevorsteht oder nicht sowie zu welchem Zeitpunkt t_{Koll} mit einer möglichen Kollision zu rechnen ist. Weiterhin wird der Eingangsschaltung 2 ein Kollisionsdetektionssignal 15 einer Kollisionsdetektionseinrichtung 5 zugeführt. Die Kollisionsdetektionseinrichtung 5 kann hierbei beispielsweise gemäß Figur 2 oder Figur 3 ausgestaltet sein, indem das Kollisionsdetektionssignal 15 der Eingangsschaltung 2 mitteilt, ob eine Kollision stattgefunden hat. Die der Eingangsschaltung 2 zugeführten Signale werden in der Kollisionserkennungseinrichtung 1 mittels eines Datenaustauschsystems 6 einer Berechnungseinrichtung 7 zugeführt, die mittels eines Kollisionsermittlungsalgorithmus aus der Bewegungsdynamik des detektierten Objekts sowie der Bewegungsdynamik des eigenen Fahrzeugs ermitteln kann, ob eine Kollision des Fahrzeugs mit diesem Objekt u-nausweichbar bevorsteht. Derartige Kollisionsdetektionsalgorithmen sind beispielsweise aus dem Stand der Technik bekannt und können auch den vorausberechneten Kollisionszeitpunkt t_{Koll} vorausbestimmen. Wird eine unausweichbare Kollision des Fahrzeugs mit dem detektierten Objekt erkannt, so gibt die Berechnungseinrichtung 7 ein Notbremsauslösesignal aus, das mittels der Datenaustauscheinrichtung 6 an eine Ausgangsschaltung 8 ausgegeben wird. Die Ausgangsschaltung 8 gibt dieses Notbremsauslösesignal an die Verzögerungseinrichtungen 9 des Fahrzeugs weiter, die beispielsweise eine elektrisch ansteuerbare Bremskraftregelung mit daran angeschlossenen Radbremsen besteht. Erhält die Verzögerungseinrichtung 9 ein Notbremsauslösesignal der Berechnungseinrichtung 7, so werden die Verzögerungseinrichtungen des Fahrzeugs derart angesteuert, dass das Fahrzeug mit der maximal möglichen Fahrzeugverzögerung abgebremst wird um die Intensität der unausweichbaren Kollision auf ein mögliches Minimum zu verringern. Da eine derart automatisch ausgelöste und automatisch durchgeführte Notbremsung mit großen Risiken für die Fahrzeuginsassen und das Fahrzeugumfeld behaftet ist, ist es erfindungsgemäß vorgesehen, die Notbremsung zu beenden, indem die Verzögerungseinrichtungen 9 des Fahrzeugs deaktiviert werden, wenn erkannt wird, dass die Auslösung der Notbremsung nicht sinnvoll war, da es nicht zu einer Kollision mit dem Objekt gekommen ist. Hierzu wird durch die Kollisionsdetektionseinrichtung 5 eine Kollision erkannt und die automatische Notbremsung automatisch deaktiviert, wenn nach Ablauf des vorausberechneten Kollisionszeitpunktes t_{Koll} durch die Kollisionsdetektionseinrichtung 5 keine Kollision detektiert wurde. Um Ungenauigkeiten des Berechnungsalgorithmusses und des damit berechneten Kollisionszeitpunktes t_{Koll} zu berücksichtigen kann es weiterhin vorgesehen sein, nach Ablauf des berechneten Kollisionszeitpunkte t_{Koll} eine zusätzliche, vorbestimmte Zeitdauer Δt abzuwarten bevor die Notbremsung deaktiviert wird, sofern bis zu diesem Zeitpunkt t_{Koll} +Δt von der Kollisionsdetektionseinrichtung 5 kein Kollisionsdetektionssignal 15 abgegeben wurde.

In Figur 2 ist eine mögliche Ausführung der Kollisionsdetektionseinrichtung 5 dargestellt. Zu erkennen sind Raddrehzahlsensoren 10, die die Drehgeschwindigkeiten der einzelnen Fahrzeugräder erfassen und einer Raddrehzahlauswerteinrichtung 11 zuführen. Im Falle einer Kollision werden alle Fahrzeugräder fast gleichzeitig in ihrer Drehgeschwindigkeit stark abgebremst, wodurch eine unstetige Änderung aller Raddrehgeschwindigkeiten der Fahrzeugräder entsteht. Zur Kollisionsdetektion ist es hierbei notwendig, dass alle Raddrehgeschwindigkeiten gemeinsam überwacht werden, da es im Falle eines Blockierschutzeingriffs einer Blockierschutzeinrichtung auch im normalen Fahrbetrieb möglich ist, dass ein einzelnes Rad eine unstetige Änderung der Raddrehgeschwindigkeit aufweist. Erkennt die Raddrehzahlauswerteeinrichtung 11, dass alle Fahrzeugräder eine unstetige Änderung der Raddrehzahlgeschwindigkeiten aufweisen, so wird von der Raddrehzahlauswerteeinrichtung 11 ein Ausgangssignal generiert, das einer UND-Verknüpfung 12 zugeführt wird. Weiterhin ist ein Gierratensensor 13 vorgesehen, der die Gierrate des Fahrzeugs erfasst und damit die Drehbewegungen des Fahrzeugs um seine Fahrzeughochachse auswertet. Im Falle einer Kollision des Fahrzeugs mit einem Objekt kommt es üblicherweise zu einem Querversatz des Fahrzeugs, der durch Auswertung des Gierratensignals des Gierratensensors 13 erkannt werden kann. Wird eine derartige unstetige Änderung des Gierratensignals erkannt, so gibt der Gierratensensor 13 ein Ausgangssignal aus, das als zweites Eingangssignal dem UND-Glied 12 zugeführt wird Wird zeitgleich von der Raddrehzahlauswerteeinrichtung 11 und dem Gierratensensor 13 eine Kollision erkannt, so wird durch das UND-Glied 12 ein Ausgangssignal erzeugt, das als Kollisionsdetektionssignal 15 der Eingangschaltung 2 der Kollisionserkennungseinrichtung 1 zugeführt wird.

Weiterhin kann es vorgesehen sein, als Kollisionsdetektionseinrichtung 5 eine Schaltung vorzusehen, die gemäß der Weiterbildung der Figur 3 aufgezeigt wird. Auch in dieser Kollisionsdetektionseinrichtung 5 ist wieder eine Raddrehzahlauswerteinrichtung 11 vorgesehen, die die Raddrehzahlgeschwindigkeiten aller Fahrzeugräder überwacht und bei einer gleichzeitigen Detektion unstetiger Änderungen der Raddrehzahlgeschwindigkeiten aller Fahrzeugräder ein Ausgangssignal generiert, das dem UND-Glied 12 zugeführt wird Wie in Figur 2 ist wiederum ein Gierratensensor 13 vorgesehen, der die Gierrate des Fahrzeugs überwacht und bei einer unstetigen Änderung der Gierratensignals in Folge eines Querversatzes des Fahrzeugs durch die Kollision ein Ausgangssignal generiert, das ebenfalls dem UND-Glied 12 zugeführt wird. Zusätzlich ist gemäß Figur 3 ein Airbag-Auslösesensor 14 vorgesehen, der beispielsweise als Beschleunigungssensor ausgeführt sein kann, der bei einer Verzögerung des Fahrzeugs in Fahrzeuglängsrichtung und bei einer betragsmäßigen Überschreitung eines Schwellenwertes die Airbags des Fahrzeugs auslöst um die Insassen bei einer Kollision des Fahrzeugs mit einem Objekt zu schützen. Wird durch den Airbag-Auslösesensor 14 eine Kollision mit einem Objekt festgestellt, so wird ein Ausgangssignal erzeugt, das als weiteres Eingangssignal dem UND-Glied 12 zugeführt wird. Erkennt das UND-Glied 12, dass die Raddrehzahlauswerteeinrichtung 11, der Gierratensensor 13 und der Airbag-Auslösesensor 14 in etwa zeitgleich eine Kollision des Fahrzeugs detektieren, so wird durch das UND-Glied 12 ein Ausgangssignal generiert, das als Kollisionsdektionssignal 15 der Eingangsschaltung 2 der Kollisionserkennungseinrichtung 1 zugeführt wird.

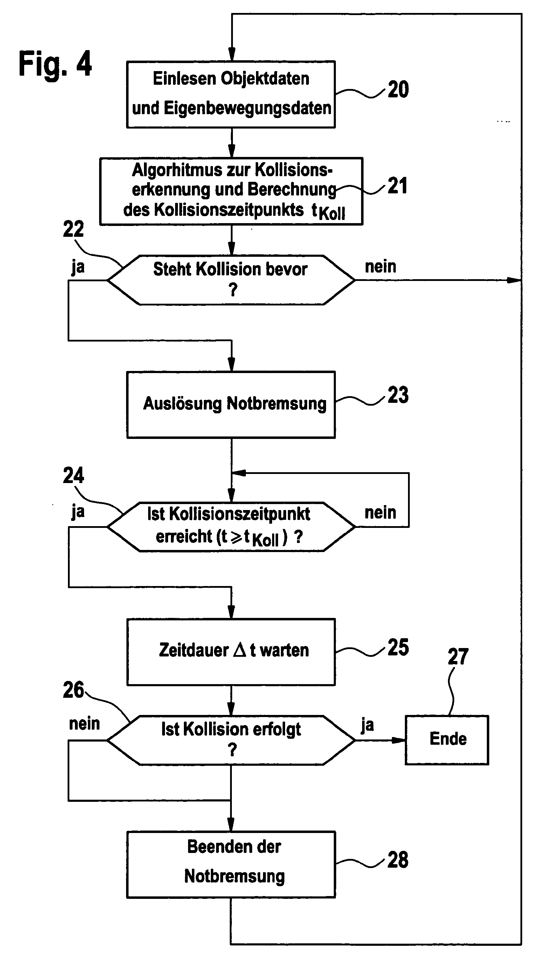

In Figur 4 ist ein schematisches Ablaufdiagramm des erfindungsgemäßen Verfahrens dargestellt. In Schritt 20 werden die Objektdaten und die Eigenbewegungsdaten in das Berechnungsmittel 7 eingelesen. Als Objektdaten werden hierzu die von der Objektdetektionssensorik 3 ermittelten Werte eingelesen, die die Position und die Geschwindigkeit sowie eventuell die Bewegungsrichtung des erkannten Objekts repräsentieren. Als Eigenbewegungsdaten werden der Berechnungseinrichtung 7 die vom Geschwindigkeitssensor 4 bereitgestellte Geschwindigkeit v des eigenen Fahrzeugs sowie eventuell die Lenkwinkelwerte, die mittels eines Lenkwinkelsensors erkannt werden können, zugeführt. Aus den in Schritt 20 eingelesenen Daten wird im folgenden Schritt 21 mittels eines Kollisionserkennungsalgorithmusses ermittelt, ob eine unausweichbare Kollision des eigenen Fahrzugs mit dem detektierten Objekt bevorsteht und bei Erkennung einer unausweichbaren Kollision der Kollisionszeitpunkt t_{Koll} berechnet. Im folgenden Schritt 22 wird abgefragt, ob eine unausweichbare Kollision bevorsteht. Wurde durch den Kollisionserkennungsalgorithmus keine bevorstehende Kollision erkannt, so verzweigt Schritt 22 nach "nein" und das Verfahren wird wieder, beginnend bei Schritt 20 abermals durchlaufen. Wurde in Schritt 22 nach "ja" verzweigt, da der Kollisionserkennungsalgorithmus in Schritt 21 eine unausweichbare Kollision erkannt hat, wird in Schritt 23 eine automatische Notbremsung ausgelöst, indem die Fahrzeugsverzögerungseinrichtungen 9 des Fahrzeugs das Fahrzeug mit einer maximal möglichen Verzögerung abbremsen. Nachdem die Notbremsung gemäß Schritt 23 ausgelöst wurde wird in Schritt 24 ermittelt, ob der in Schritt 21 ermittelte Kollisionszeitpunkt t_{Koll} bereits erreicht ist. Wurde der Kollisionszeitpunkt t_{Koll} noch nicht erreicht (t < t_{Koll}), so verzweigt Schritt 24 nach "nein", wodurch eine Warteschleife entsteht, bis der Kollisionszeitpunkt t_{Koll} erreicht ist. Wird der vom Kollisionserkennungsalgorithmus vorausberechnete Kollisionszeitpunkt t_{Koll} erreicht (t > t_{Koll}), so verzweigt Schritt 24 nach "ja" und es wird gemäß Schritt 25 eine Zeitdauer Δt abgewartet. Diese Zeitdauer Δt berücksichtigt hierbei, dass beispielsweise Ungenauigkeiten des Kollisionsberechnungsalgorithmusses oder der Eingangsdaten zu einer ungenauen Bestimmung des Kollisionszeitpunktes t_{Koll} geführt haben und eine Kollision erst kurz nach dem berechneten Kollisionszeitpunkt t_{Koll} erfolgen kann. Nach Abwarten der Zeitdauer Δt und somit nach Erreichen des Zeitpunktes t_{Koll} + Δt wird in Schritt 26 ermittelt, ob die Kollisionsdetektionseinrichtung 5 eine Kollision der Fahrzeugs mit dem detektieren Objekt erkannt hat. Wurde eine derartige Kollision ermittelt, verzweigt Schritt 26 nach "ja" und das Verfahren wird in Schritt 27 beendet, da eine Fahrzeugkollision erfolgt ist und eine Weiterfahrt nicht möglich ist. Wurde von der Kollisionsdetektionseinrichtung 5 keine Kollision zum Zeitpunkt t_{Koll} + Δt festgestellt, verzweigt Schritt 26 nach "nein" und es wird im folgenden Schritt 28 die Notbremsung beendet, indem die Fahrzeugverzögerungseinrichtungen 9 deaktiviert werden. In diesem Fall wird davon ausgegangen, dass die Auslösung der automatischen Notbremsung infolge fehlerhafter Eingangssignale fälschlicherweise erfolgte und das Risiko der Fahrzeuginsassen bzw. des Fahrzeugumfeldes durch die Notbremsung dadurch verringert werden kann, dass die automatische Notbremsung nicht bis in den Stillstand vollendet wird sondern abgebrochen wird. Nach Beendigung der Notbremsung gemäß Schritt 28 wird das Verfahren wieder erneut, beginnend mit Schritt 20, durchlaufen.

## Patentansprüche

1. Vorrichtung zur Steuerung einer automatischen Notbremsung eines Kraftfahrzeugs, zur Verminderung der Kollisionsschwere einer Fahrzeugkollision mit einem Objekt, wobei eine Objektdetektionseinrichtung (3) vorgesehen ist, die die Position und/oder die Geschwindigkeit des Objekts bezüglich des eigenen Fahrzeugs erfasst und einer Kollisionserkennungseinrichtung (1) zuführt, die ermittelt, ob eine Kollision mit einem Objekt bevorsteht und bei Erkennen einer bevorstehenden Kollision eine Notbremsung auslöst (9) und einen Kollisionszeitpunkt (t_{Koll}) ermittelt, wobei nach Ablauf der Zeitdauer bis zum ermittelten Kollisionszeitpunkt (t_{Koll}) die Notbremsung (9) beendet wird, **dadurch gekennzeichnet, dass** nach Ablauf des berechneten Kollisionszeitpunkts t_{Koll} eine zusätzliche, vorbestimmte Zeitdauer Δt abgewartet wird, bevor die Notbremsung deaktiviert wird, sofern bis zu diesem Zeitpunkt (t_{Koll} +Δt) von einer Kollisionsdetektionseinrichtung (5) kein Kollisionsdetektionssignal (15) abgegeben wurde.

2. Vorrichtung nach Anspruch 1, **dadurch gekennzeichnet, dass** eine Kollisionsdetektionseinrichtung (5) vorgesehen ist, die bei einer erfolgten Kollision ein Kollisionsdetektionssignal (15) an die Kollisionserkennungseinrichtung (1) übermittelt.

3. Vorrichtung nach Anspruch 1 oder 2, **dadurch gekennzeichnet, dass** die Kollisionsdetektionseinrichtung (5) eine Kollision anhand einer unstetigen Änderung der Raddrehgeschwindigkeiten (10,11) aller Fahrzeugräder erkannt wird.

4. Vorrichtung nach einem der vorhergehenden Ansprüche, **dadurch gekennzeichnet, dass** die Kollisionsdetektionseinrichtung (5) eine Kollision anhand einer unstetigen Änderung des Gierratensignals (13) erkannt wird.

5. Vorrichtung nach einem der vorhergehenden Ansprüche, **dadurch gekennzeichnet, dass** die Kollisionsdetektionseinrichtung (5) eine Kollision anhand eines Auslösesignals einer Airbag-Auslösesensorik (14), insbesondere eines Beschleunigungssensors zur Airbagauslösung, erkennt.

6. Vorrichtung nach einem der vorhergehenden Ansprüche, **dadurch gekennzeichnet, dass** die Kollisionsdetektionseinrichtung (5) eine Kollision anhand einer UND-Verknüpfung (12) von mindestens zwei Bedingungen aus
- einer unstetigen Änderung der Raddrehgeschwindigkeiten aller Fahrzeugräder (10,11),
- einer unstetigen Änderung des Gierratensignals (13),
- anhand eines Auslösesignals einer Airbag-Auslösesensorik (14) erkennt.

7. Verfahren zur Steuerung einer automatischen Notbremsung eines Kraftfahrzeugs zur Verminderung der Kollisionsschwere einer Fahrzeugkollision mit einem Objekt, wobei mittels einer Objektdetektionseinrichtung (3) die Position und/oder Geschwindigkeit des Objekts bezüglich des eigenen Fahrzeugs erfasst werden, dass diese einer Kollisionserkennungseinrichtung (20) zugeführt werden, die ermittelt, ob eine Kollision mit einem Objekt bevorsteht (21) und bei Erkennen einer bevorstehenden Kollision (22) eine Notbremsung auslöst (23) und einen Kollisionszeitpunkt (t_{Koll}) ermittelt (21), wobei nach Ablauf der Zeitdauer bis zum ermittelten Kollisionszeitpunkt (24) die Notbremsung beendet wird (28), **dadurch gekennzeichnet, dass** nach Ablauf des berechneten Kollisionszeitpunkts t_{Koll} eine zusätzliche, vorbestimmte Zeitdauer Δt abgewartet wird (25), bevor die Notbremsung deaktiviert wird, sofern bis zu diesem Zeitpunkt (t_{Koll} +Δt) von einer Kollisionsdetektionseinrichtung (5) kein Kollisionsdetektionssignal (15) abgegeben wurde (26).

8. Verfahren nach Anspruch 7, **dadurch gekennzeichnet, dass** die Beendigung der Notbremsung (28) erst nach einer vorbestimmten Zeitdauer (Δt) nach dem berechneten Kollisionszeitpunkt (t_{Koll}) erfolgt (25).

## Claims

1. Device for controlling an automatic emergency braking operation of a motor vehicle, for the purpose of reducing the severity of a collision of a vehicle with an object, wherein an object detection device (3) is provided which senses the position and/or the speed of the object with respect to the driver's own vehicle and feeds this information to a collision detection device (1) which determines whether a collision with an object is imminent, and, if an imminent collision is detected, triggers (9) an emergency braking operation and determines a collision time (t_{coll}), wherein, after the expiry of the time period up to the determined collision time (t_{coll}), the emergency braking operation (9) is terminated, **characterized in that**, after the expiry of the calculated collision time (t_{coll}), the system waits for an additional, predetermined time period Δt before the emergency braking operation is deactivated if a collision detection signal (15) has not been output by a collision detection device (5) up to this time (t_{coll} + Δt).

2. Device according to Claim 1, **characterized in that** a collision detection device (5) is provided which, when a collision has taken place, transmits a collision detection signal (15) to the collision detection device (1).

3. Device according to Claim 1 or 2, **characterized in that** the collision detection device (5) detects a collision on the basis of an inconstant change in the wheel speeds (10, 11) of all the vehicle wheels.

4. Device according to one of the preceding claims, **characterized in that** the collision detection device (5) detects a collision on the basis of an inconstant change in the yaw rate signal (13).

5. Device according to one of the preceding claims, **characterized in that** the collision detection device (5) detects a collision on the basis of a triggering signal of an airbag triggering sensor system (14), in particular of an acceleration sensor for triggering an airbag.

6. Device according to one of the preceding claims, **characterized in that** the collision detection device (5) detects a collision on the basis of an AND logic combination (12) of at least two conditions from
- an inconstant change in the wheel speeds of all the vehicle wheels (10, 11),
- an inconstant change in the yaw rate signal (13),
- on the basis of a triggering signal of an airbag triggering sensor system (14).

7. Method for controlling an automatic emergency braking operation of a motor vehicle, for the purpose of reducing the severity of a collision of a vehicle with an object, wherein an object detection device (3) is used to sense the position and/or speed of the object with respect to the driver's own vehicle and wherein this information is fed to a collision detection device (20) which determines whether a collision with an object is imminent (21), and, if an imminent collision (22) is detected, triggers (23) an emergency braking operation and determines (21) a collision time (t_{coll}), wherein, after the expiry of the time period up to the determined collision time (24), the emergency braking operation is terminated (28), **characterized in that**, after the expiry of the calculated collision time (t_{coll}), the system waits (25) for an additional, predetermined time period Δt before the emergency braking operation is deactivated if a collision detection signal (15) has not been output (26) by a collision detection device (5) up to this time (t_{coll} + Δt).

8. Method according to Claim 7, **characterized in that** the termination of the emergency braking operation (28) does not take place (25) until after a predetermined time period (Δt) after the calculated collision time (t_{coll}).

## Revendications

1. Procédé de commande du freinage automatique d'urgence d'un véhicule automobile en vue de diminuer la gravité d'une collision du véhicule avec un objet, avec un système (3) de détection d'objet qui détecte la position et/ou la vitesse de l'objet par rapport au véhicule propre et les amène à un système (1) de détection de collision qui détermine s'il existe un risque de collision avec l'objet et qui, en cas de détection d'un risque de collision, déclenche (9) un freinage d'urgence et détermine un instant de collision (t_{coll}), le freinage d'urgence (9) étant arrêté lorsque la durée qui précède l'instant de collision (t_{coll}) déterminé s'est écoulée,
**caractérisé en ce que**
lorsque l'instant de collision t_{coll} calculé est atteint, on attend une durée supplémentaire prédéterminée Δt avant de désactiver le freinage d'urgence si à cet instant (t_{coll} +Δt) aucun signal (15) de détection de collision n'a été délivré par un système (5) de détection de collision.

2. Dispositif selon la revendication 1, **caractérisé en ce qu'**il présente un système (5) de détection de collision qui transmet un signal (15) de détection de collision au système (1) de détection de collision lorsqu'une collision a eu lieu.

3. Dispositif selon les revendications 1 ou 2,
**caractérisé en ce que** le système (5) de détection de collision détecte une collision sur base d'une modification non constante de la vitesse de rotation (10, 11) de toutes les roues du véhicule.

4. Dispositif selon l'une des revendications précédentes, **caractérisé en ce que** le système (5) de détection de collision détecte une collision sur base d'une modification non constante du signal (13) de vitesse de lacet.

5. Dispositif selon l'une des revendications précédentes, **caractérisé en ce que** le système (5) de détection de collision détecte une collision sur base du signal de déclenchement d'un ensemble (14) de sondes de déclenchement de coussins gonflables de sécurité et en particulier de la sonde d'accélération utilisée pour le déclenchement des coussins gonflables de sécurité.

6. Dispositif selon l'une des revendications précédentes, **caractérisé en ce que** le système (5) de détection de collision détecte une collision sur base de l'association logique ET (12) entre au moins deux conditions sélectionnées parmi :
- une modification non constante de la vitesse de rotation de toutes les roues (10, 11) du véhicule,
- une modification non constante du signal (13) de vitesse de lacet et
- le signal de déclenchement d'un ensemble (14) de sondes de déclenchement de coussins gonflables de sécurité.

7. Procédé de commande du freinage automatique d'urgence d'un véhicule automobile en vue de diminuer la gravité d'une collision du véhicule avec un objet, dans lequel la position et/ou la vitesse de l'objet par rapport au véhicule propre sont déterminées au moyen d'un système (3) de détection d'objet, ces valeurs étant amenées à un système (20) de détection de collision qui détermine s'il existe un risque (21) de collision avec l'objet et qui, en cas de détection d'un risque (22) de collision, déclenche un freinage d'urgence (23) et détermine (21) un instant de collision (t_{coll}), le freinage d'urgence étant arrêté (28) après que la durée qui précède l'instant (24) déterminé pour la collision s'est écoulée,
**caractérisé en ce que**
lorsque l'instant calculé de collision t_{coll} est dépassé, on attend (25) une durée supplémentaire Δt prédéterminée avant la désactivation du freinage d'urgence pour autant qu'à cet instant (t_{coll} +Δt), aucun signal (15) de détection de collision n'ait été délivré (26) par le dispositif (5) de détection de collision.

8. Procédé selon la revendication 7, **caractérisé en ce que** le freinage d'urgence (28) n'est pas arrêté (25) tant qu'une durée prédéterminée (Δt) ne s'est pas écoulée depuis l'instant calculé de collision (t_{coll}).
